# EUROPEAN PATENT APPLICATION

(11) **EP 1 594 257 A1**
(43) Date of publication of application: **09.11.2005**
(21) Application number: 03815516.4
(22) Date of filing: 13.08.2003
(51) Int. Cl.: H04L 12/28, H04L 29/10

(54) **METHOD AND SYSTEM FOR DIFFERENT DATA FRAME THROWIN AND TRANSFER IN DIGITAL TRANSMISSION NETWORK**

(30) Priority: 28.01.2003 CN 03103096
(71) Applicant: Huawei Technologies Co., Ltd., Shenzhen, Guangdong 518057 (CN)
(72) Inventor: HE, Zhiqun Huawei Service Centre Building, Shenzhen, Guangdong 518057 (CN); WANG, Yuxiang Huawei Service Centre Building, Shenzhen, Guangdong 518057 (CN)
(74) Representative: Goddar, Heinz J.
(86) International application number: PCT/CN2003/000676
(87) International publication number: WO 2004/068790

(57) **Abstract**

A method for processing data using a system for different data frames access and transport over a digital transport network, said system comprising: at least one User-Network Interface, which is used to couple with the user's network; at least one Network-Network Interface , which is used to couple with said digital transport network to transport data; at least one mapping and de-mapping device; a virtual interface device, which is coupled to at least one UNI and coupled to at least one NNI via the mapping and de-mapping device; a control device, which is coupled to the virtual interface device to access and transport the data frames, said method comprising: the virtual interface device classifying the data frames; the virtual interface device outputting the data frames to corresponding device interfaces.

## Description

### Field of the Invention

The present invention relates to a system and method for data frames access and transport, in particular to a system and method for different data frames access and transport over a digital transport network.

### Background of the Invention

Because Ethernet technology is featured with low price and high expansibility, etc., it has evolved from a mainstream LAN technology to a primary data service access technology and is widely used in Metropolitan Area Network (MAN) by more and more telecom operators. Providing Ethernet data services has becoming a trend for telecom operators. Ethernet data services can be classified into two types: Ethernet private line services and Virtual Local Area Network (VLAN) services.

For convenience, the phrases and abbreviations in the following description have the following meanings: MPLS - Multi-protocol Label Switching; GFP - Generic Framing Procedure; VLAN - virtual Local Area Network; VMAN - virtual Metropolitan Area Network; RPR - Resilient Packet Ring.

Currently, most of the telecom operators' data transmission networks are SDH/SONET networks. Therefore, it is a highlight for telecom operators and telecom equipment manufacturers to access and transfer Ethernet data frames effectively in a SDH/SONET network to meet the increasing demand for Ethernet data services. At present, several telecom equipment manufacturers have provided the devices to access and transfer Ethernet data frames in a SDH/SONET network, and those devices may be classified into 3 types according to the implementation approach of functionality:
(1)Data mapping and de-mapping scheme;
(2)Bridge scheme;
(3)RPR scheme.

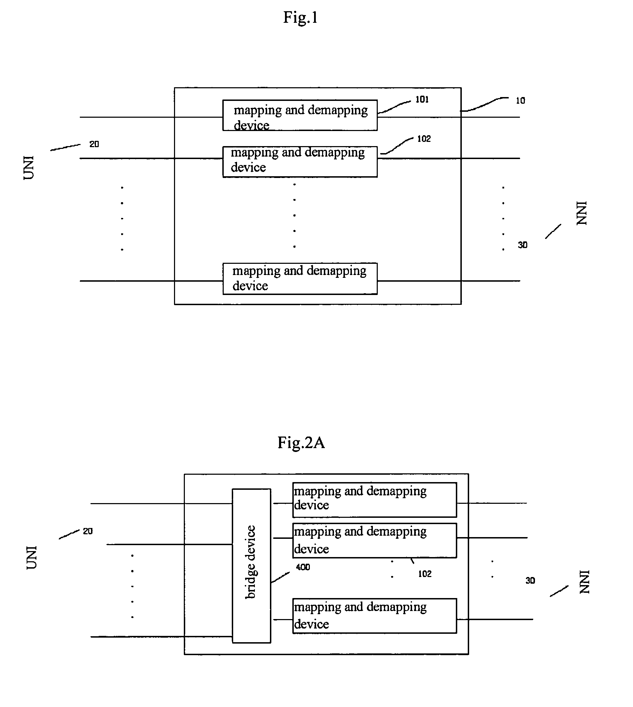

Fig.1 shows a block diagram of device according to the data mapping and de-mapping scheme in the first prior art. The device comprises one or more User-Network Interfaces (UNI) 20 (standard Ethernet interfaces), one or more Network-Network Interfaces (NNI) 30 (synchronous digital transmission channels), one or more mapping and de-mapping devices 101, 102, ..., each of which corresponds to a unique UNI and a unique NNI. Wherein, the data frames entering the device via UNI 20 and data frames output from the device comply with Ethernet data standard; data frames entering the device via NNI 30 and data frame output from the device comply with synchronous digital transport network standard.

Wherein the mapping and de-mapping device 10 maps Ethernet data frames entering the device via UNI 20 to become synchronous digital data frames, and outputs the mapped data frames via NNI 30; the mapping and de-mapping device 10 de-maps the synchronous digital data entering the device via NNI to Ethernet data frames, and outputs the data frames via the UNI. However, the functionality of the device is simple, thus it can only provide Ethernet private line services.

Fig.2A shows a block diagram of the device utilizing bridge scheme in the second prior art. The device comprises one or more UNIs 20 (standard Ethernet interfaces), each of which corresponds to a unique bridge port. The device further comprises one or more NNIs 30 (synchronous digital transmission channels) . The device further comprises a bridge device 400 (described in detail in IEEE802.1D and IEEE802.1Q), wherein the bridge device 400 comprises a plurality of bridge ports, each of which corresponds to a unique UNI or a unique mapping and de-mapping device. Each mapping and de-mapping device corresponds to a unique bridge port and a unique NNI. Wherein, the data frames entering the device via UNI 20 and the data frames output from the device comply with Ethernet data standard; data frames entering the device from NNI 30 and data frame output from the device comply with the standard of synchronous digital transport network.

Data frames entering the device via UNI 20 enter the bridge device 400 via the bridge port corresponding to the UNI; the bridge device 400 calculates the bridge output port according to the address information in the data frames and sends the data frames to the corresponding mapping and de-mapping device 102 (the mapping and de-mapping device maps the data frames and then outputs them to the NNI) via the output port, and vice versa.

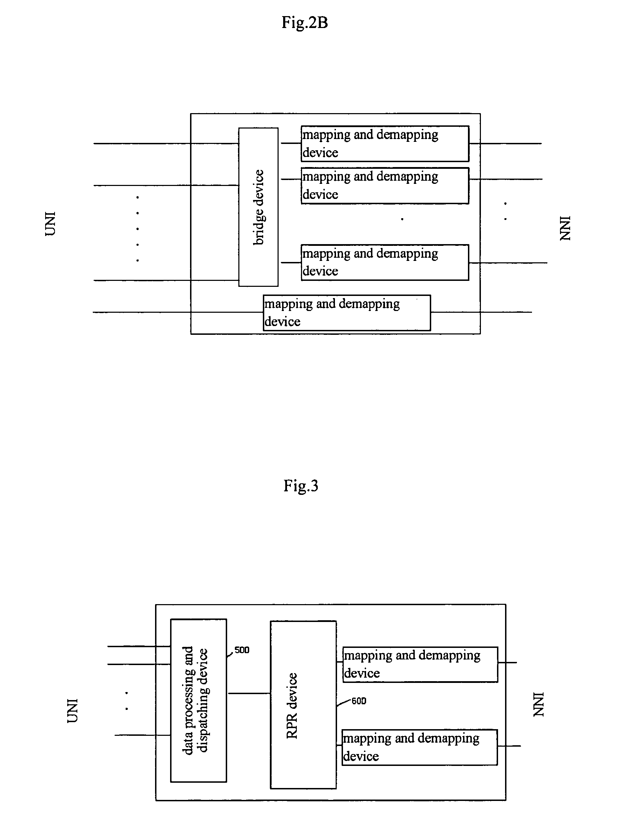

In the bridge scheme, usually the operator is allowed to map partial or all UNIs to mapping and de-mapping devices in a one to one way through configuration. In this case, the device employs both of above technical schemes, so it is called an enhanced bridge scheme. The functional model of an enhanced bridge device is shown in Fig.2B.

The disadvantage of the second prior art is:
(1) It is unable to provide integral VLAN service. If a plurality of users are attached to the device via UNIs and there are conflicts among address spaces of Ethernet data frames of those users, the device is unable to isolate the conflicts effectively, thus it is unable to provide services correctly to those users.
(2) A common bridge (non-enhanced bridge) is unable to provide Ethernet private line service.
(3) A UNI can only support one service type (Ethernet private line service or VLAN service), which limits the access capability of the device. In some cases, though the processing capacity of the device is still sufficient enough, new devices have to be added to improve access capacity because the UNIs have been used up.
(4) A NNI can only support one service type (Ethernet private line service or VLAN service), which leads to low convergence capability of the device. In some cases, in a star topology network, though the processing capacity of the device is still sufficient enough, new devices have to be added to improve convergence capacity because the NNIs have been used up. For operators, it means not only new investment but also bandwidth waste.

Fig. 3 shows a block diagram of the device utilizing RPR scheme in the third prior art. The device comprises one or more UNIs (standard Ethernet UNIs), two NNIs (synchronous digital transmission channels), and a RPR device 600 (described in IEEE802.17), two mapping and de-mapping devices, and a data processing device 500 which may be a data converging/de-converging device or a bridge device).

Wherein the data frames entering the device via the UNI 20 are processed as follows:
Step 1: the data processing device 500 processes the data frames (the data frames are converged if the data processing device is a data converging/de-converging device; the data frames are switched if the data processing device is a bridge device);
Step 2: the data processing device 500 transfers the processed data frames to the RPR device 600;
Step 3: the RPR device 600 sends the data frames to the corresponding mapping and de-mapping device according to the address information in the data frames;
Step 4: the mapping and de-mapping device maps performs mapping operation for the data frames and sends them to outside of the device via the corresponding NNI.

The data frames entering the device via the NNI are processed as follows:
Step 1: the mapping and de-mapping device performs de-mapping operation for the data frames and transfers the de-mapped data frames to the RPR device 600;
Step 2: the RPR device 600 processes the data frames and then sends them to the data processing device;
Step 3: the data processing device 500 processes the data frames (the data frames are de-converged if the data processing device is a data converging/de-converging device; the data frames are switched if the data processing device is a bridge device);
Step 4: the data processing device 500 finds corresponding UNI according to the address information in the data frames and then outputs the data frames via the UNI.

The disadvantages of said scheme are:
(1) It is unable to provide Ethernet private line service and VLAN service at the same time. If the data processing device is a bridge device, it doesn't support Ethernet private line service; if the data processing device is a data converging/de-converging device, it doesn't support VLAN service.
(2) It can only be used in a ring topology network.

### Summary of the Invention

An object of the present invention is to provide a data processing and dispatching device, a system and method for Ethernet data frames access and transport over a SDH/SONET network, in order to achieve individualized services and improve the serviceability of the device.

According to one aspect of the present invention, it is provided a method for processing data using a system for different data frames access and transport over a digital transport network, said system comprising: at least one User-Network Interface, which is used to couple with the user's network; at least one Network-Network Interface, which is used to couple with said digital transport network to transport data; at least one mapping and de-mapping device; a virtual interface device, which is coupled to at least one UNI and coupled to at least one NNI via the mapping and de-mapping device; a control device, which is coupled to the virtual interface device to access and transport the data frames, said method comprising:

the virtual interface device classifying the data frames;

the virtual interface device outputting the data frames to corresponding device interfaces.

Preferably, said control device comprising: a data processing and dispatching device, which is coupled to the virtual interface device; at least one virtual private device and/or at least one virtual bridge device and/or at least one RPR device, which are coupled to the data processing and dispatching device; wherein said method further comprises a step of: the virtual bridge devices exchanging the data frames.

Optionally, said control device comprising: a data processing and dispatching device, which is coupled to the virtual interface device; at least one virtual private device and/or at least one virtual bridge device and/or at least one RPR device, which are coupled to the data processing and dispatching device; wherein said method further comprises a step of: the virtual private devices processing the data frames.

Preferably, the step of the virtual private devices processing the data frames comprises the steps of: relaying, and/or converging and/or de-converging the data frames.

Optionally, the method further comprising: the RPR devices processing the data frames.

Preferably, the step of the RPR devices processing the data frames comprises the steps of: terminating the transport of data frames, and/or relaying the transport of data frames, and/or beginning the transport of data frames.

Optionally, the method further comprising: the RPR devices processing the data frames.

Preferably, the step of the RPR devices processing the data frames comprises the steps of: terminating the transport of data frames, and/or relaying the transport of data frames, and/or beginning the transport of data frames.

The system and method according to the present invention have the following advantages:
(1) with the system and method of the present invention, operators can adjust the processing flow in the device flexibly according to the network topology, users' requirements and bandwidth resource etc, thus the processing ability and efficiency of bandwidth can be improved.
(2) With the system and method of the present invention, individualized services can be quickly provided for users. The operator may provide new services for users through creating new flow combinations, without upgrading or purchasing devices.

### Brief Description of the Drawings

Fig. 1 is the block diagram of the data mapping and de-mapping scheme according to the first prior art;
Fig.2A is the block diagram of the bridge scheme according to the second prior art;
Fig.2B is the block diagram of the enhanced bridge scheme according to the second prior art;
Fig.3 is the block diagram of RPR scheme according to the third prior art;
Fig.4 is the schematic diagram of a preferred embodiment of the system for Ethernet data frames access and transport over a SDH/SONET network according to the present invention;
Fig.4 (F) is the data processing flowchart according to a preferred embodiment of the system for Ethernet data frames access and transport over a SDH/SONET network of the present invention;

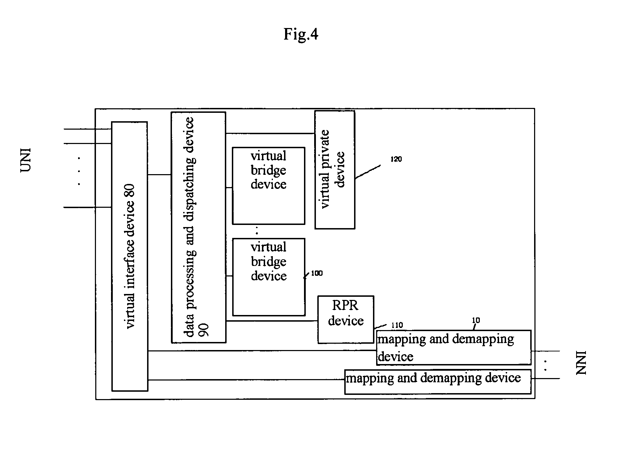

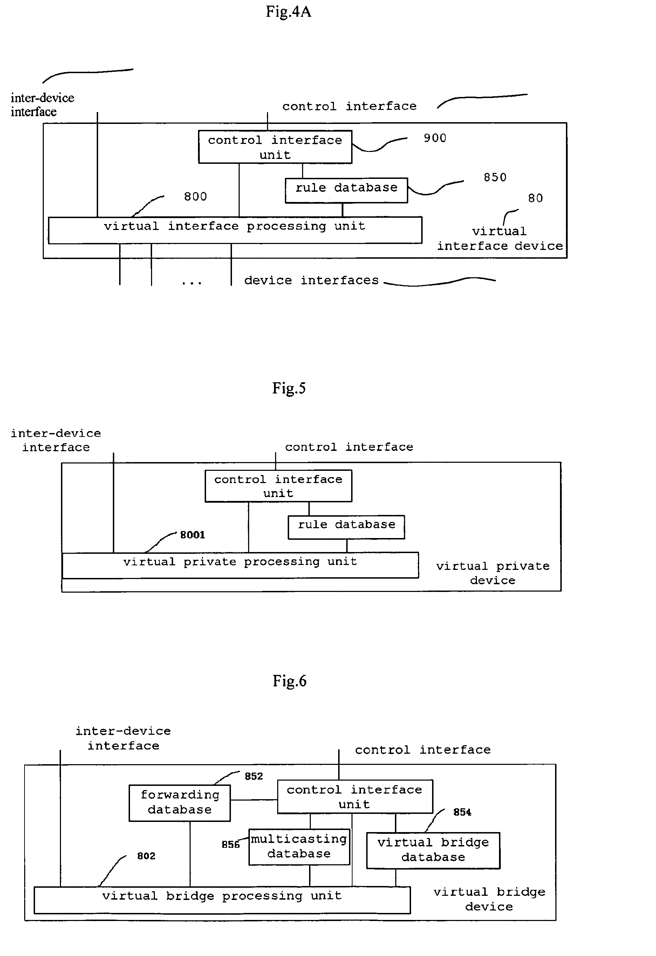

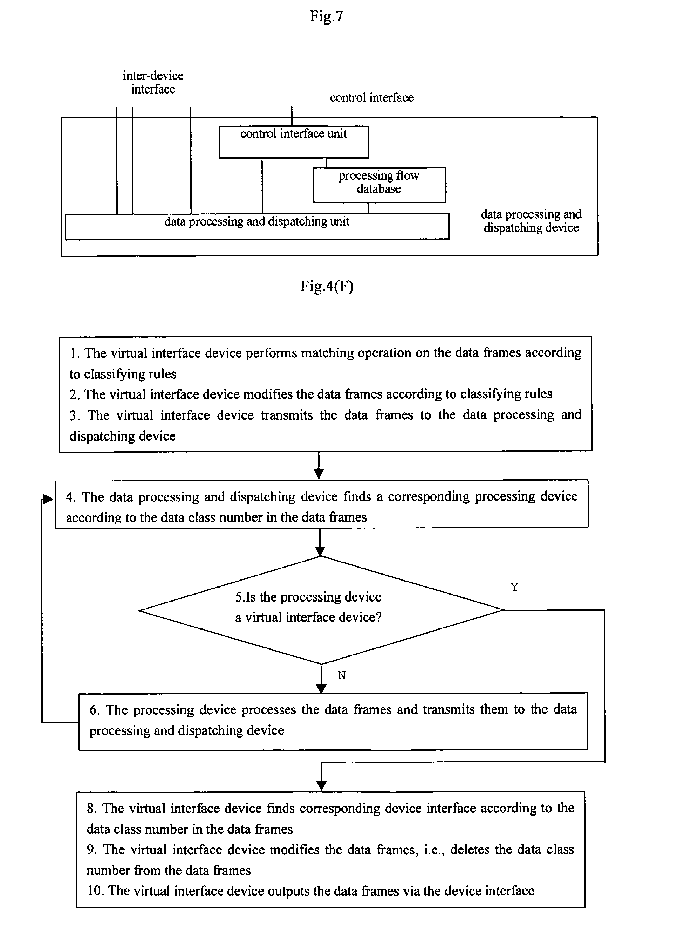

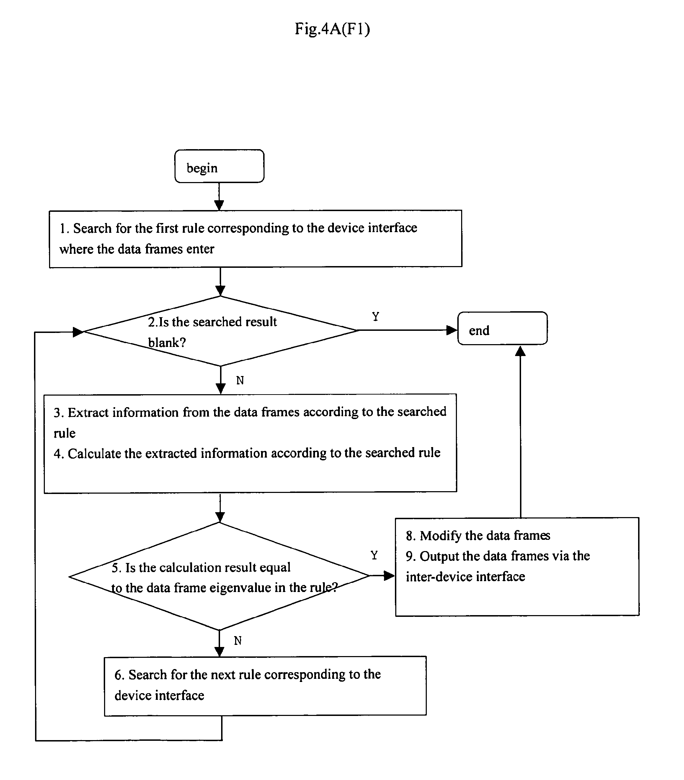

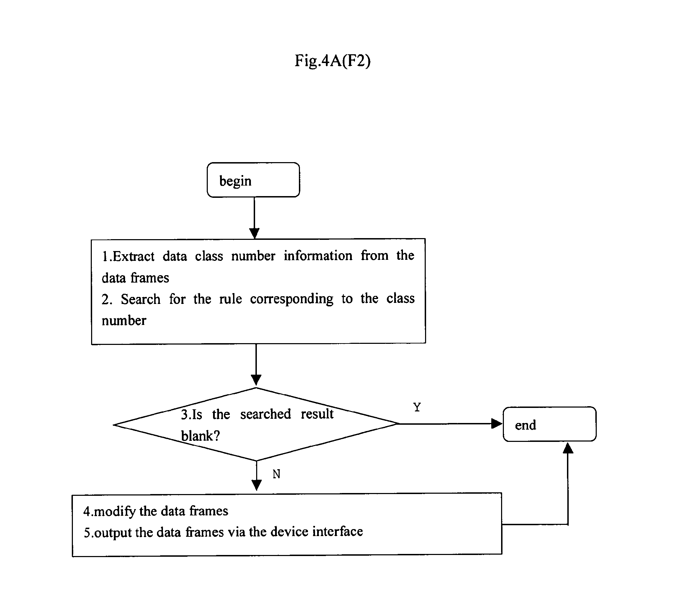

Fig.4A is the schematic block diagram of virtual interface device according to a preferred embodiment of the system for Ethernet data frames access and transport over a SDH/SONET network according to the present invention;
Fig. 4A (F1) is the flowchart of the virtual interface device processing the incoming data from a device interface according to a preferred embodiment of the system for Ethernet data frames access and transport over a SDH/SONET network of the present invention;
Fig.4A (F2) is the flowchart of the virtual interface device processing the incoming data from the inter-device interface according to a preferred embodiment of the system for Ethernet data frames access and transport over a SDH/SONET network of the present invention;

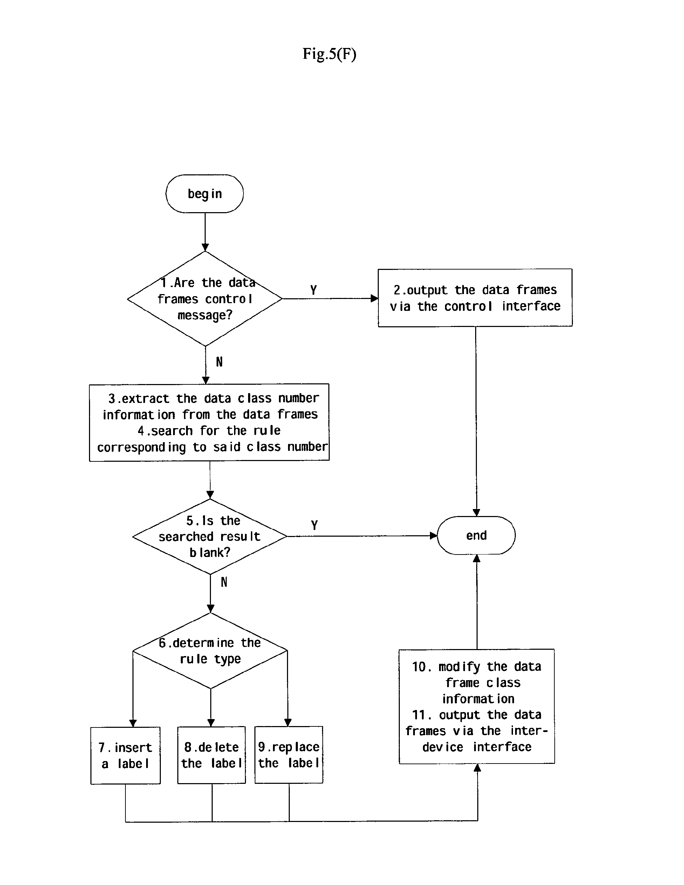

Fig.5 is the schematic block diagram of the virtual private device according to a preferred embodiment of the system for Ethernet data frames access and transport over a SDH/SONET network of the present invention;
Fig.5 (F) is the flowchart of the virtual private device processing the incoming data from the inter-device interface according to a preferred embodiment of the system for Ethernet data frames access and transport over a SDH/SONET network of the present invention;

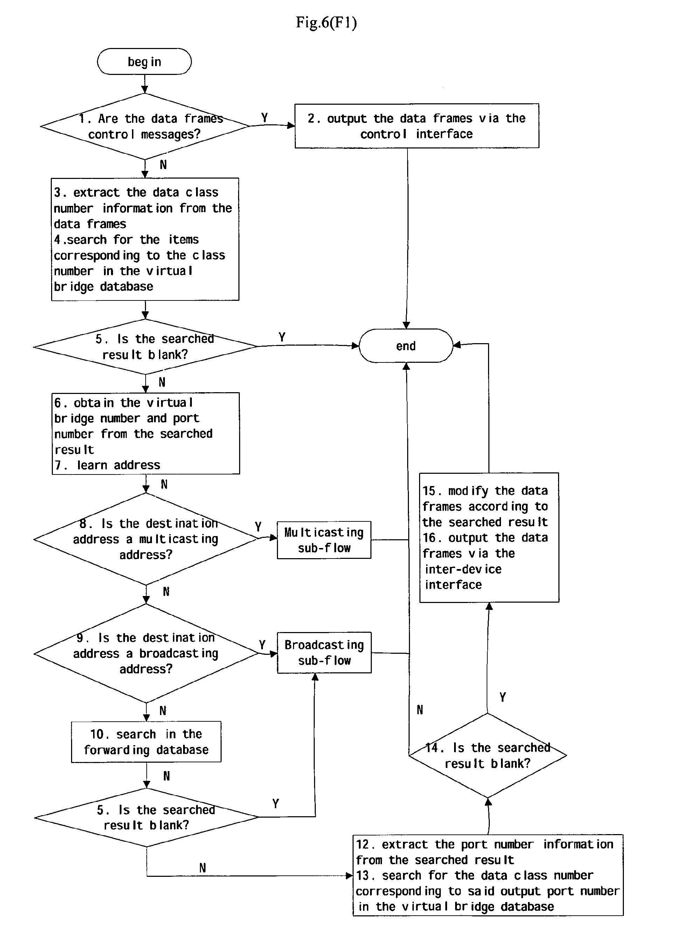

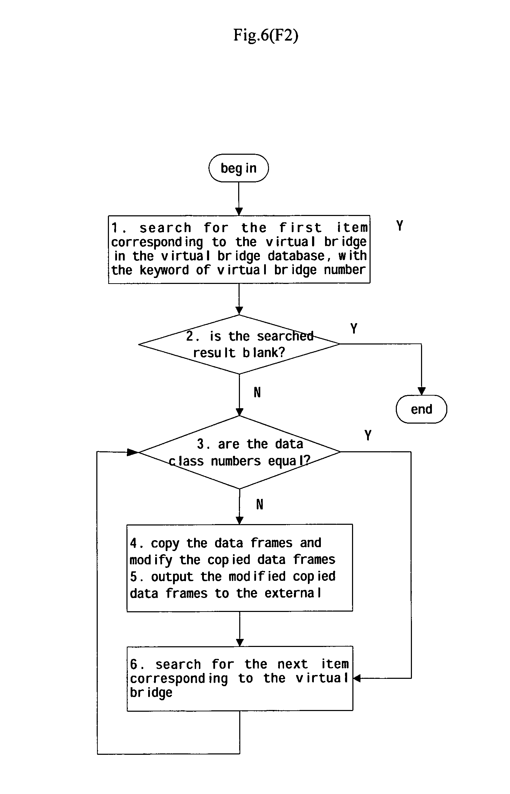

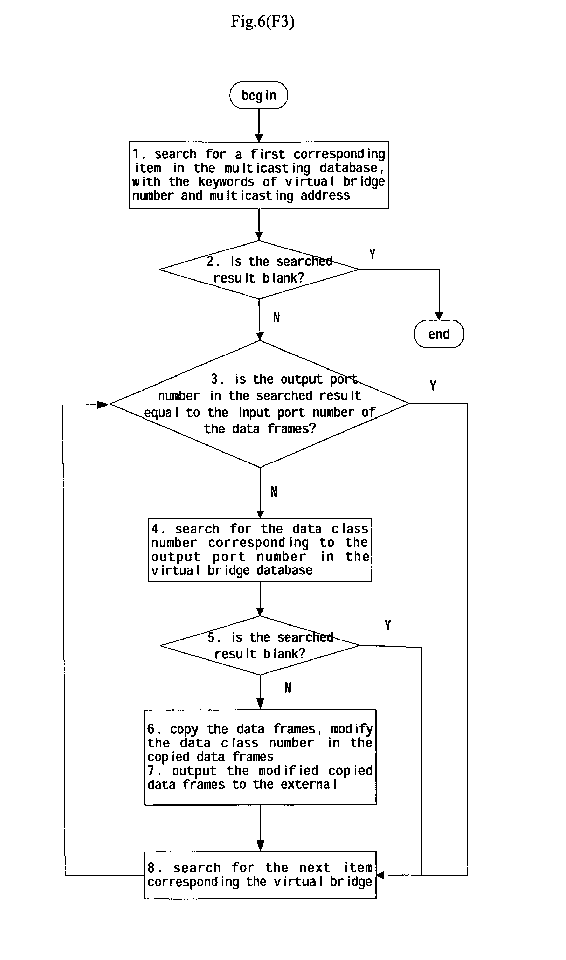

Fig.6 is the schematic block diagram of the virtual bridge device according to a preferred embodiment of the system for Ethernet data frames access and transport over a SDH/SONET network of the present invention;
Fig.6 (F1) is the flowchart of the virtual bridge device processing the incoming data from the inter-device interface according to a preferred embodiment of the system for Ethernet data frames access and transport over a SDH/SONET network of the present invention;
Fig.6 (F2) is the flowchart of the broadcasting sub-flow of the virtual bridge device processing the incoming data from the inter-device interface according to a preferred embodiment of the system for Ethernet data frames access and transport over a SDH/SONET network of the present invention;
Fig.6 (F3) is the flowchart of the multicasting sub-flow of the virtual bridge device processing the incoming data from the inter-device interface according to a preferred embodiment of the system for Ethernet data frames access and transport over a SDH/SONET network of the present invention;

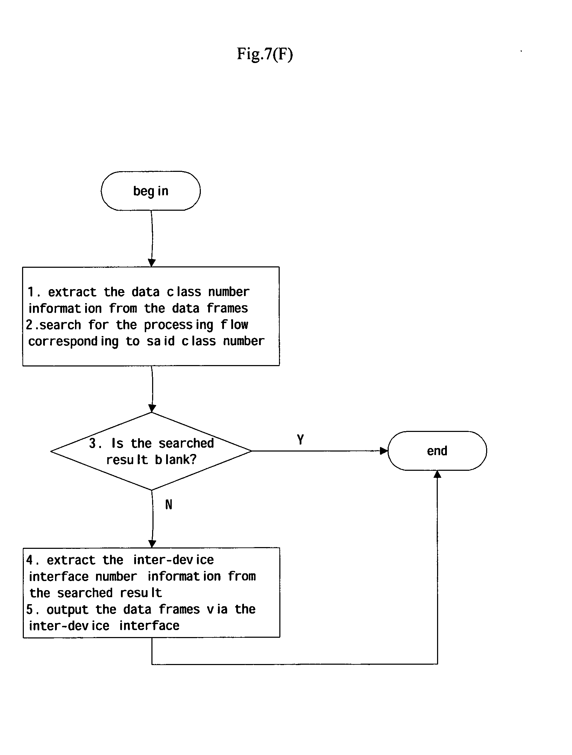

Fig.7 is the schematic block diagram of the data processing and dispatching device according to a preferred embodiment of the system for Ethernet data frames access and transport over a SDH/SONET network of the present invention;
Fig.7 (F) is the flowchart of the data processing and dispatching device processing the incoming data according to a preferred embodiment of the system for Ethernet data frames access and transport over a SDH/SONET network of the present invention;

### Detailed description of the Embodiments

To make the system and method of the present invention be better understood, the basic function of the devices is described first. Usually, any device has the following 3 functions:
(1) input function, i.e., receive information from external of the device;
(2) processing function, i.e., process said information received from external of the device;
(3) output function, i.e., output the processed information.

For a device accessing and transporting Ethernet data frames over a SDH/SONET network:
(1) input function: receive information from external of the device via the UNIs and the NNIs;
(2) output function: output the processed information via the UNIs and the NNIs;
(3) processing function: for a device accessing and transporting Ethernet data frames over a SDH/SONET network, different service abilities and service efficiencies depend on different solutions.

In addition, the phrase "standard Ethernet interface" used in the present invention means the following:

IEEE802.3 defines the LAN interface in detail; in the present invention, an interface under IEEE802.3 is regarded as a standard Ethernet interface.

The present invention will be described hereunder with reference to the drawings. For concision, components and units described in prior art will not be described in detail hereunder. And components and units described above will not be described in detail hereunder.

Fig.4 shows a system for different data frames access and transport over a SDH/SONET network, for different data frames access and transporting. The system comprises a plurality of UNIs designed to couple with the user's network; a plurality of NNIs designed to couple with said digital transport network to transport data; a plurality of mapping and de-mapping devices 10; a virtual interface device 80 coupled to said UNIs and coupled to said NNIs via said mapping and de-mapping devices 10; a data processing and dispatching device 90 coupled to said virtual interface device 80; a plurality of virtual private devices 120 and a virtual bridge device 100 and a PRP device 110 coupled to said data processing and dispatching device. Although a plurality of virtual private devices 120, a virtual bridge device 100 and a PRP device 110 are described in the present invention, it should be noted that one or a combination of any two of them can implement the present invention in practice. The input to said system for different data frames access and transport over a digital transport network comprises: (1) data frames entering the device via the UNIs; (2) data frames entering the mapping and de-mapping devices via the NNIs . The data frames output from said system for different data frames access and transport over a digital transport network comprises: (1) data frames output to external of the device via the UNIs; (2) data frames output to external of the mapping and de-mapping device via the NNIs.

Fig.4 (F1) shows the processing steps for data frames entering the device via the UNIs according to the system for different data frames access and transport over a SDH/SONET network.
First, in step 1, the virtual interface device performs matching to the data frames according to classifying rules;
in step 2, the virtual interface device modifies the data frames according to classifying rules, i.e., inserts data class number in the data frames;
in step 3, the virtual interface device transfers the modified data frames to the data processing and dispatching device;
in step 4, the data processing and dispatching device finds a corresponding processing device according to the data class number in the data frames;
in step 5, the data processing and dispatching device transfers the data frames to the corresponding processing device; if the corresponding processing device is the virtual interface device, goes to step 8;
in step 6, said corresponding processing device processes the data frames, and modifies the data class number at the end of the processing, and then transfers the modified data frames to the data processing and dispatching device;
in step 7, the system goes to step 4;
in step 8, the virtual interface device finds a corresponding device interface according to the data class number in the data frames;
in step 9, the virtual interface device modifies the data frames, i.e., deletes the data class number from the data frames;
in step 10, the virtual interface device outputs the modified data frames via a device interface (if the device interface is a NNI, mapping operation should be performed through the mapping and de-mapping devices before output).

The processing steps for data frames entering the device via the NNIs according to the system for different data frames access and transport over a SDH/SONET network are as follows:
in step 1, the mapping and de-mapping devices perform a de-mapping operation on the data frames;
in step 2, the rest processing steps are identical to those for data frames entering the device via the UNIs.

The structure of main components in the system for different data frames access and transport over a SDH/SONET network will now be described with reference to the drawings.

Fig.4A shows the schematic block diagram of the virtual interface device according to a preferred embodiment of the system for Ethernet data frames access and transport over a SDH/SONET network of the present invention. In the system, a virtual interface device 80 is used to enhance access ability. Via the virtual interface device 80, a device interface (UNI 20 or NNI 30) may be expanded to a plurality of virtual interfaces, each of which corresponds to different users and different services respectively. For data frames entering the device via the device interfaces (UNIs 20 and NNIs 30), a virtual interface processing unit 800 of the virtual interface device will classify them according to different services required by different users and choose a corresponding processing according to the classification. A different processing corresponds to different rules stored in the rule database 850. A control interface unit controls the virtual interface processing unit 800 to perform classification according to the instructions from a control interface and searches for a corresponding rule stored in the rule database 850 to process the data. Data frames output from the device are transported to a corresponding device interface to output after processing according to the classification in the virtual interface device. Because the virtual interface device stores N rules, the corresponding relation between the device interface and the rules is 1:N. The rules in the virtual interface device may be created or deleted dynamically. Therefore, it is easy to modify the rules to enhance the adaptability of the system according to the users' requirements and the updating of the system. The device also comprises a software loader (not shown) to load different software.

As the processing center, the virtual interface processing unit 800 is responsible for processing data frames and serves as a processing center; the processing steps and processing logics in the virtual interface processing unit are firmware and can' t be changed during operation of the device. The rule database is a control center and is responsible for providing relevant processing and control parameters when the virtual interface processing unit processes the data frames. Different parameters lead to different processing actions. During operation of the device, the rules in the rule database may be updated. The control interface unit is provided with an external control interface of the device. Via the control interface, the control system of the device may monitor the working status of the virtual interface processing unit and performs adding, deleting, modifying, and searching operations on rules in the rule database. The rule database may store a plurality of rules, each of which contains five parts: device interface number, data frame class number, data frame address offset, data frame eigenvalue, and data frame comparison mask.

Wherein the virtual interface device is connected with the UNIs or NNIs via device interfaces. The corresponding relation between the UNIs (or NNIs) and the device interfaces is 1:1. The virtual interface device is connected with the data processing and dispatching device via the inter-device interface. The virtual interface device is connected with the control system of the device via the control interface.

Fig.4A (F1) shows the steps of the virtual interface processing unit processing data frames entering the virtual interface device via a device interface:
step 1: searching for the first rule in the rule database corresponding to the device interface with the index of the device interface number where the data frames enter;
step 2: determining the searched result; if it is blank, discarding said data frames and going to step 10;
step 3: reading information at the corresponding address offset of the data frame according to the data frame address offset in the rule;
step 4: performing AND operation in bit between said read information and data frame comparison mask in the rule;
step 5: comparing the calculated result in step 4 with the data frame eigenvalue in the rule; if they are equal, going to step 8;
step 6: searching for the next rule corresponding to said device interface in the rule database;
Step 7: going to step 2;
step 8: modifying the data frames, i.e., inserting data class number information in the rule in the header of the data frames;
step 9: sending the data frames to the data frame processing and dispatching device via the inter-device interface;
step 10: ending.

Fig.4A (F2) shows the steps of the virtual interface processing unit processing data frames entering the virtual interface device via the inter-device interface. For data frames entering the virtual interface device via the inter-device interface, the processing steps performed by the virtual interface processing unit are as follows:
step 1: extracting the data frame class number information from header of the data frames;
step 2: searching in the rule database with the index of class number information;
step 3: determining the searched result; if it is blank, discarding said data frames and going to step 6;
step 4: modifying the data frames, i.e., deleting the data frame class number information from header of the data frames;
step 5: sending the data frames to a corresponding device interface according to the device interface number in the rule;
step 6: ending.

Fig. 5 is the schematic block diagram of the virtual private device according to a preferred embodiment of the system for Ethernet data frames access and transport over a SDH/SONET network of the present invention. Different data frames access and transport over a SDH/SONET network comprises: a plurality of UNIs, which is used to couple with the user's network; a plurality of NNI, which is used to couple with the digital transport network to transmit data; a plurality of mapping and de-mapping devices 10; a virtual interface device 80, which is coupled to the UNIs and coupled to the NNIs via the mapping and de-mapping devices 10; a data processing and dispatching device 90, which is coupled to the virtual interface device 80; a plurality of virtual private device 120 and a virtual bridge device 100 and a RPR device 110. Although a plurality of virtual private devices 120, a virtual bridge device 100 and a PRP device 110 are described in the present invention, it should be noted that one or a combination of two of them can implement the present invention in practice. In the virtual private device, a virtual private processing unit 8001 is coupled to a inter-device interface to process the data through the inter-device interface. The virtual private processing unit 8001 is also coupled to a rule database and a control interface unit. The control interface unit exchanges data with external via the control interface.

The present invention enhances converging ability of the system by using the virtual private device. The virtual private device stores a plurality of converging rules, a plurality of de-converging rules, and a plurality of relay rules (the relay rules are optional and unnecessary in some simple virtual private devices). The corresponding relation between data classes and the rules is 1:1. The rules in the virtual private device can be created and deleted dynamically. Data frames of different users can be isolated, transported and shared over the same physical channel through virtual private device adding a label before sending, changing the label during transport and removing the label at the destination address. A virtual private device comprises a virtual private processing unit and a rule database.

The virtual private processing unit has two major functions:
(a) detecting control messages and transferring the control messages to the control system of the device via the control interface unit.
(b) performing convergence, de-convergence, or relay operation on data frames except for the control messages.

The virtual private processing unit is a processing center of the device; the following items are stored in the virtual private processing unit as firmware:
(a) format of control messages;
(b) processing steps and logics for data frames;
(c) format of rules in the rule database;

The rule database is responsible for the processing action of the virtual private processing unit and serves as a control center. The rules in the rule database may be updated dynamically. The rule database may store a plurality of rules, each of which comprises the following four parts of information: input data frame class number, rule type (convergence/de-convergence/relay), label number, and output data frame class number.

Wherein said virtual private device is connected with the said data processing and dispatching device via the inter-device interface; said virtual private device is connected with the control system of the device via the control interface.

There is a plurality of technical solutions to implement the virtual private device. However, the data frames processing steps and logics in the virtual private processing unit are identical under different technical solutions. The main differences between these technical solutions are:
(a) format of rules in the rule database, for example, length and position of labels in each rule;
(b) format of control messages in the virtual private processing unit.

In view of expandability and compatibility, it is recommended to implement the virtual private device with MPLS, GFP, VMAN, or Nested VLAN technology in the present invention. The device manufacturers may also employ self-defined label formats (or self-defined data frame encapsulations) to implement said virtual private device. The virtual private device may support a plurality of different technologies at a time.

Fig.5 (F) shows the flowchart of the virtual private processing; for data frames entering the device via the inter-device interface, the processing steps of the virtual private processing unit are as follows:
step 1: determining whether the data frames are control messages; if so, going to step 3;
step 2: transporting the data frames to an external control system via the control interface unit, and then going to step 12;
step 3: extracting the input data class number information from the header of the data frames;
step 4: searching in the rule database with the index of the input data class number information;
step 5: determining the searched result; if it is blank, discarding said data frames and going to step 12;
step 6: determining the rule type; if it is a convergence rule, going to step 7; if it is a de-convergence rule, going to step 8; if it is a relay rule, going to step 9;
step 7: modifying the data frames, i.e., inserting a label number defined in the rule at a special position in the data frames, and then going to step 10;
step 8: modifying the data frames, i.e., removing the label number at the special position in the data frames, and then going to step 10;
step 9: modifying the data frames, i.e., replacing the label number at the special position in the data frames with a label number defined in the rule;
step 10: modifying the data frames, i.e., replacing the data class number at the header of the data frames with the output data frame class number defined in the rule;
step 11: sending the data frames to the data frame processing and dispatching device via the inter-device interface;
step 12: ending.

Fig.6 is the schematic block diagram of the virtual bridge device according to a preferred embodiment of the system for Ethernet data frames access and transport over a SDH/SONET network of the present invention. The present invention overcomes the problem of limited Ethernet data frame address space with virtual bridge devices. A virtual bridge device may provide a plurality of virtual bridges. Each virtual bridge possesses all functions and properties of a bridge device. However, it differs from the bridge device in that the virtual bridge may be created and deleted dynamically. During operation of the device, the operator may create or delete a plurality of virtual bridges dynamically because each virtual bridge has an independent address space, the operator may provide VLAN services to users with different virtual bridges if that conflicts exists among address spaces.

The operator may configure a virtual bridge just like a physical bridge. The virtual bridge further expands the features of a bridge to support VMAN-based switching operation. A virtual bridge device comprises a virtual bridge processing unit 802, a multicasting database 856, a control interface unit, a forwarding database 852, and a virtual bridge database 854.

The virtual bridge processing unit has 3 major functions:
(a) detecting control messages, and transferring the control messages to the control system of the device via the control interface unit;
(b) learning addresses, and storing the knowledge acquired into the forwarding database;
(c) performing switching on data frames except for control messages and modifying data class information in the data frames.

The virtual bridge processing unit is the processing center of the device, and there are five items embedded in it:
(a) format of control messages;
(b) processing steps and logics for data frames;
(c) format of forwarding items in the forwarding database;
(d) format of multicasting items in the multicasting database;
(e) format of items in the virtual bridge database.

The virtual bridge database, the multicasting database, and the forwarding database are responsible for the processing action of the virtual bridge processing unit, and the items in the databases may be updated during operation of the device. The data formats of items in the multicasting database and the forwarding database are identical, and each item contains the following information:
(a) virtual bridge number;
(b) input port of virtual bridge;
(c) input destination address;
(d) input VLAN number;
(e) input VMAN number;
(f) output port of virtual bridge.

In the multicasting database, the database code is the combination of all fields; in the forwarding database, the database code is the combination of all fields except for the output port of virtual bridge.

Each item in the virtual bridge database contains the following information:
(a) input class number;
(b) virtual bridge number;
(c) port number;
(d) output class number.

Via the control interface, an external control system of the device may implement the following functions:
(a) performing adding, deleting, modifying, and searching operations on items in the above databases;
(b) monitoring the working status of the virtual bridge processing unit.

The virtual bridge device is connected with the data processing and dispatching device via the inter-device interface. The virtual bridge device is connected with the control system of the device via the control interface.

Fig.6 (F1) is the flowchart of the virtual bridge device processing the incoming data from the inter-device interface according to a preferred embodiment of the system for Ethernet data frames access and transport over a SDH/SONET network of the present invention. For data frames entering the device via the inter-device interface, the virtual bridge processing unit performs the following processing steps:
step 1: determining whether the data frames are control messages; if not, going to step 3;
step 2: transporting the data frames to an external control system via the control interface unit, and then going to step 17;
step 3: extracting input data class number, destination address, source address, VLAN number, and VMAN number (optional) from a fixed position in the data frames;
step 4: searching in the virtual bridge database with the index of the data class number extracted;
step 5: determining the searched result; if it is blank, discarding said data frames and going to step 17;
step 6: exacting the virtual bridge number and port number information from the searched result;
step 7: learning the source address, and then updating the forwarding database according to the learning result;
step 8: determining whether the destination address is a multicasting address; if so, executing a multicasting sub-flow first, and then going to step 17;
step 9: determining whether the destination address is a broadcasting address, if so, executing a broadcasting sub-flow, and then going to step 17;
step 10: searching in the forwarding database with the index of virtual bridge number, input port, and destination address, VLAN number, and VMAN number (optional);
step 11: determining the searched result; if it is blank, executing a broadcasting sub-flow, and then going to step 17;
step 12: extracting the output port number from the searched result;
step 13: searching in the virtual bridge database with the index of the virtual bridge number and the output port number;
step 14: determining the searched result; if it is blank, discarding said data frames and going to step 17;
step 15: extracting the output class number from the searched result and modifying the data frames, i.e., replacing the class number in the data frames with the output data class number;
step 16: outputting the modified data frames via the inter-device interface;
step 17: ending.

Fig.6 (F2) is the flowchart of the broadcasting sub-flow of the virtual bridge device processing the incoming data from the inter-device interface according to a preferred embodiment of the system for Ethernet data frames access and transport over a SDH/SONET network of the present invention. The processing steps in the broadcasting sub-flow comprise:
step 1: searching for the first item corresponding to the virtual bridge in the virtual bridge database, with the keyword of virtual bridge number;
step 2: determining the searched result; if it is blank, discarding said data frames and going to step 7;
step 3: comparing the input class number in the searched result with the class number in the data frames; if they are equal to each other, going to step 6;
step 4: copying the data frames, extracting the output class number from the searched result, and modifying the modifying the copied data frames, i.e., replacing the class number in the copied data frames with the output class number;
step 5: outputting the modified copied data frames to the external of the device via the inter-device interface;
step 6: searching for the next item corresponding to the virtual bridge in the virtual bridge database, with the keyword of virtual bridge number, and going to step 2;

step 7: ending the sub-flow.Fig.6 (F3) is the flowchart of the multicasting sub-flow of the virtual bridge device processing the incoming data from the inter-device interface according to a preferred embodiment of the system for Ethernet data frames access and transport over a SDH/SONET network of the present invention. The processing steps in the multicasting sub-flow comprise:
step 1: searching for the first item corresponding to the keywords in the multicasting database, with the keywords of virtual bridge number, input port, destination address, VLAN number, VMAN number (optional);
step 2: determining the searched result; if it is blank, discarding said data frames and going to step 9;
step 3: comparing the output port number in the searched result with the extracted input port number (the input port number corresponding to the class number of data frames in the virtual bridge database); if they are equal to each other, going to step 8;
step 4: searching in the virtual bridge database, with the keyword of virtual bridge number and output port number;
step 5: determining the searched result; if it is blank, discarding said data frames and going to step 8;
step 6: copying the data frames, extracting the output class number from the searched result, and modifying the modifying the copied data frames, i.e., replacing the class number in the copied data frames with the output class number;
step 7: outputting the modified copied data frames to the external of the device via the inter-device interface;
step 8: searching for the next item in the multicasting database, with the keywords of virtual bridge number, input port, destination address, VLAN number, VMAN number (optional), going to step 2;

step 9: ending the sub-flow.Fig.7 is the schematic block diagram of the data processing and dispatching device according to the system for Ethernet data frames access and transport over a SDH/SONET network of the present invention. Different data frames access and transport over a SDH/SONET network comprises: a plurality of UNIs, which is used to couple with the user's network; a plurality of NNI, which is used to couple with the digital transport network to transmit data; a plurality of mapping and de-mapping devices 10; a virtual interface device 80, which is coupled to the UNIs and coupled to the NNIs via the mapping and de-mapping devices 10; a data processing and dispatching device 90, which is coupled to the virtual interface device 80; a plurality of virtual private device 120 and a virtual bridge device 100 and a RPR device 110. Although a plurality of virtual private devices 120, a virtual bridge device 100 and a PRP device 110 are described in the present invention, it should be noted that one or a combination of two of them can implement the present invention in practice. In the data processing and dispatching device, the data processing and dispatching device is coupled to a plurality of inter-device interfaces to process the data passing through the inter-device interfaces. The data processing and dispatching device is also coupled to a processing flow database and a control interface unit. The control interface unit exchanges data with external via a control interface.

The present invention employs the data processing and dispatching device to implement individualized services to improve serviceability of the device. The data processing and dispatching device stores a plurality of processing flows in it. The corresponding relation between the processing flows and the data frame classes is 1:1. The data dispatching and processing device finds a corresponding processing flow according to a data frame class, and informs other corresponding devices to process the data frames according to the processing flow. The processing flows in the data frame processing and dispatching device may be created, modified, or deleted dynamically. During operation of the device, the operator may quickly provide individualized services to maximize the efficacy of the device through dynamically adding, modifying, and deleting the processing flows in the data processing and dispatching device.

The data processing and dispatching unit is the processing center of the device, in which the processing steps are fixed. The data processing and dispatching device comprises the plurality of inter-device interfaces, each of which corresponds to a unique external device. The corresponding relation between the inter-device interfaces and the external devices are fixed.

The processing flow database is the control center of the device, and may be updated dynamically. Each processing flow in the processing flow database contains the following information:
(a) data frame class number;
(b) inter-device interface number

The data processing and dispatching device is connected with other devices via the inter-device interfaces, each of the inter-device interfaces corresponds to a virtual bridge device, a virtual private device, a RPR device, or a virtual interface device. The data processing and dispatching device is connected with the control system of the device via the control interface.

Fig.7 (F) is the flowchart of the data processing and dispatching device processing the incoming data according to a preferred embodiment of the system for Ethernet data frames access and transport over a synchronous digital transport network of the present invention. The data processing and dispatching unit processes the incoming data frames as follows:
step 1: extracting the class number from the data frames;
step 2: searching in the processing flow database with the index of the extracted class number;
step 3: determining the searched result; if it is blank, discarding said data frames and going to step 6;
step 4: extracting inter-device interface number from the searched result;
step 5: outputting the data frames via an inter-device interface corresponding to the inter-device interface number to external of the device;
step 6: ending.

### Application of the system:

The operator may employ the system shown in Fig. 4 to provide Ethernet services for users, which correspond to combinations of a plurality of processing flows. The operator may define and choose required processing flow combinations flexibly according to network topology, the users' service demands and bandwidth resource. The commonly-used processing flow combinations are as follows:

processing flow combination 1:
(1) the virtual interface device classifies the data frames;
(2) the virtual interface device outputs the data frames to corresponding device interfaces.

Processing flow combination 2:
(1) the virtual interface device classifies the data frames;
(2) the virtual bridge device exchanges the data frames;
(3) the virtual interface device outputs the data frames to corresponding device interfaces.

Processing flow combination 3:
(1) the virtual interface device classifies the data frames;
(2) the virtual private device processes the data frames (relay, converge, or de-converge);
(3) the virtual interface device outputs the data frames to corresponding device interfaces.

Processing flow combination 4:
(1) the virtual interface device classifies the data frames;
(2) the RPR device processes the data frames (terminates, relays, or starts data frame transportation);
(3) the virtual interface device outputs the data frames to corresponding device interfaces.

Processing flow combination 5:
(1) the virtual interface device classifies the data frames;
(2) the virtual bridge device exchanges the data frames;
(3) the virtual private device converges the data frames;
(4) the virtual interface device outputs the data frames to corresponding device interfaces.

Processing flow combination 6:
(1) the virtual interface device classifies the data frames;
(2) the virtual private device de-converges the data frames;
(3) the virtual bridge device exchanges the data frames;
(4) the virtual interface device outputs the data frames to corresponding device interfaces.

Processing flow combination 7:
(1) the virtual interface device classifies the data frames;
(2) the virtual private device de-converges the data frames;
(3) the virtual bridge device exchanges the data frames;
(4) the virtual private device converges the data frames;
(5) the virtual interface device outputs the data frames to corresponding device interfaces.

Processing flow combination 8:
(1) the virtual interface device classifies the data frames;
(2) the RPR device terminates the transport of data frames;
(3) the virtual bridge device exchanges the data frames;
(4) the virtual interface device outputs the data frames to corresponding device interfaces.

Processing flow combination 9:
(1) the virtual interface device classifies the data frames;
(2) the virtual bridge device exchanges the data frames;
(3) the RPR device begins the transport of data frames;
(4) the virtual interface device outputs the data frames to corresponding device interfaces.

Processing flow combination 10:
(1) the virtual interface device classifies the data frames;
(2) the RPR device terminates the transport of data frames;
(3) the virtual bridge device exchanges the data frames;
(4) the RPR device begins the transport of data frames;
(5) the virtual interface device outputs the data frames to corresponding device interfaces.

Processing flow combination 11:
(1) the virtual interface device classifies the data frames;
(2) the virtual private device converges the data frames;
(3) the RPR device begins the transport of data frames;
(4) the virtual interface device outputs the data frames to corresponding device interfaces.

Processing flow combination 12:
(1) the virtual interface device classifies the data frames;
(2) the RPR device terminates the transport of data frames;
(3) the virtual private device de-converges the data frames;
(4) the virtual interface device outputs the data frames to corresponding device interfaces.

Processing flow combination 13:
(1) the virtual interface device classifies the data frames;
(2) the RPR device terminates the transport of data frames;
(3) the virtual private device relays the data frames;
(4) the RPR device begins the transport of data frames;
(5) the virtual interface device outputs the data frames to corresponding device interfaces.

Processing flow combination 14:
(1) the virtual interface device classifies the data frames;
(2) the RPR device terminates the transport of data frames;
(3) the virtual private device de-converges the data frames;
(4) the virtual bridge device exchanges the data frames;
(5) the virtual interface device outputs the data frames to corresponding device interfaces.

Processing flow combination 15:
(1) the virtual interface device classifies the data frames;
(2) the virtual bridge device exchanges the data frames;
(3) the virtual private device converges the data frames;
(4) the RPR device begins the transport of data frames;
(5) the virtual interface device outputs the data frames to corresponding device interfaces.

Processing flow combination 16:
(1) the virtual interface device classifies the data frames;
(2) the RPR device terminates the transport of data frames;
(3) the virtual private device de-converges the data frames;
(4) the virtual bridge device exchanges the data frames;
(5) the virtual private device converges the data frames;
(6) the RPR device begins the transport of data frames;
(7) the virtual interface device outputs the data frames to corresponding device interfaces.

Processing flow combination 17:
(1) the virtual interface device classifies the data frames;
(2) the virtual private device de-converges the data frames;
(3) the RPR device terminates the transport of data frames;
(4) the virtual interface device outputs the data frames to corresponding device interfaces.

Processing flow combination 18:
(1) the virtual interface device classifies the data frames;
(2) the RPR device begins the transport of data frames;
(3) the virtual private device converges the data frames;
(4) the virtual interface device outputs the data frames to corresponding device interfaces.

Processing flow combination 19:
(1) the virtual interface device classifies the data frames;
(2) the virtual private device de-converges the data frames;
(3) the RPR device relays the transport of data frames;
(4) the virtual private device converges the data frames;
(5) the virtual interface device outputs the data frames to corresponding device interfaces.

Processing flow combination 20:
(1) the virtual interface device classifies the data frames;
(2) the virtual private device de-converges the data frames;
(3) the RPR device terminates the transport of data frames;
(4) the virtual bridge device exchanges the data frames;
(5) the virtual interface device outputs the data frames to corresponding device interfaces.

Processing flow combination 21:
(1) the virtual interface device classifies the data frames;
(2) the virtual bridge device exchanges the data frames;
(3) the RPR device begins the transport of data frames;
(4) the virtual private device converges the data frames;
(5) the virtual interface device outputs the data frames to corresponding device interfaces.

Processing flow combination 22:
(1) the virtual interface device classifies the data frames;
(2) the virtual private device de-converges the data frames;
(3) the RPR device terminates the transport of data frames;
(4) the virtual bridge device exchanges the data frames;
(5) the RPR device begins the transport of data frames;
(6) the virtual private device converges the data frames;

(7) the virtual interface device outputs the data frames to corresponding device interfaces.When implementing functions of the devices, the device manufacturers may partially or completely employ the system and method according to the present invention. For some devices with simple functions, part of components can be omitted and the processing flow is relatively simple. The device manufacturers may even treat the processing as firmware through fixing connections among the devices to omit the data processing and dispatching device. For instance, for a device that provides only Ethernet private service, it may comprises only the following devices:
(1) one or more UNIs;
(2) one or more NNIs and mapping and de-mapping devices;
(3) a virtual interface device;
(4) a virtual private device.

Said device supports the following combinations of processing flows:
(1) processing flow combination 1;
(2) processing flow combination 3.

With the system and method of the present invention, integral VLAN services can be provided for users. The system and method of the present invention overcome the restriction on Ethernet data frame address space at UNIs. When a plurality of Ethernet data frames is sent to such a device of the network, there is no restriction on address space of Ethernet data frames.

With the system and method of the present invention, a device interface (UNI or NNI) can support both VLAN service and Ethernet data private service, and a plurality of Ethernet data frames from many users can be accessed and converged at a device interface, thus the accessing and converging capability of the device is enhanced greatly.

With the system and method of the present invention, the operator may maximize processing capacity of devices and utilization ratio of bandwidth resource through flexible adjustment to internal processing flows according to network topology, the users' service demands, and bandwidth resource.

With the system and method of the present invention, individualized services can be quickly provided for users. The operator may provide new services for users through creating new flow combinations, without upgrading or purchasing devices.

According to the present invention, data frames entering the device via device interfaces are processed after classified; different data classes correspond to different processing flows, which are implemented by the virtual interface device.

The existing technical solutions and devices have to be implemented on a presumption: data frames from a device interface belong to the same class, and different classes of data frames must enter the device via different device interfaces. Therefore, in the existing technical solution and system, the incoming data frames via the same device interface are processed through the same processing flow, thus the corresponding relation between processing flows and device interfaces is 1: n. Therefore, if there are many data classes, though the processing capacity of the device is still sufficient enough, some services can't be supported due to lack of free device interfaces.

With the system and method of the present invention, however, data frames from a device interface may contain various classes, and processing flows for different classes of data frames are different; the corresponding relation between processing flows and device interfaces is m:n.

In addition, the present invention supports free combination of processing flows; the data processing and dispatching device and the combination of its processing flows is an important part of the present invention.

Existing technical solutions and devices have no data processing and dispatching device and support only several fixed processing flows, and thus lack of flexibility. In practice, the requirements of operators for functions of devices are always changing.

A system lacking of flexibility is unable to adapt to the changing environment. In the present invention, the operator can update the processing flows of the device dynamically, and users can choose flow combinations provided by the device or create new flow combinations by himself/herself as required. There are 22 processing flow combinations available.

In the existing technical solutions and devices, the amount of bridge devices is certain; so conflicts among data frame address spaces of different users can be avoided only through restricting the data frame address spaces of users. Whereas the virtual bridge devices in the present invention can add virtual bridges dynamically, and the address space of each virtual bridge is independent; different virtual bridges correspond to different users; therefore, the present invention has no restriction to data frame address spaces of users.

In addition, data frames for different users can be isolated, transported and shared by adding a label before sending, changing the label during transport and removing the label at destination address, thus the virtual private device of the present invention is achieved.

Though the present invention is described with reference to embodiments, those skilled in the art should understand there may be lots of changes and modifications without departing from the spirit of the present invention. So any change and modification and its equivalence should be in the protective scope of the present invention.

## Claims

1. A method for processing data using a system for different data frames access and transport over a digital transport network, said system comprising: at least one User-Network Interface, which is used to couple with the user's network; at least one Network-Network Interface , which is used to couple with said digital transport network to transport data; at least one mapping and de-mapping device; a virtual interface device, which is coupled to at least one UNI and coupled to at least one NNI via the mapping and de-mapping device; a control device, which is coupled to the virtual interface device to access and transport the data frames, said method comprising:
the virtual interface device classifying the data frames;
the virtual interface device outputting the data frames to corresponding device interfaces.

2. The method according to claim 1, said control device comprising: a data processing and dispatching device, which is coupled to the virtual interface device; at least one virtual private device and/or at least one virtual bridge device and/or at least one RPR device, which are coupled to the data processing and dispatching device; wherein said method further comprises a step of: the virtual bridge devices exchanging the data frames.

3. The method according to claim 1 or 2, said control device comprising: a data processing and dispatching device, which is coupled to the.virtual interface device; at least one virtual private device and/or at least one virtual bridge device and/or at least one RPR device, which are coupled to the data processing and dispatching device; wherein said method further comprises a step of: the virtual private devices processing the data frames.

4. The method according to claim 3, wherein the step of the virtual private devices processing the data frames comprises the steps of: relaying, and/or converging and/or de-converging the data frames.

5. The method according to claim 1 or 2, further comprising: the RPR devices processing the data frames.

6. The method according to claim 5, wherein the step of the RPR devices processing the data frames comprises the steps of: terminating the transport of data frames, and/or relaying the transport of data frames, and/or beginning the transport of data frames.

7. The method according to claim 3, further comprising a step of: the RPR devices processing the data frames.

8. The method according to claim 7, wherein the step of the RPR devices processing the data frames comprises the steps of: terminating the transport of data frames, and/or relaying the transport of data frames, and/or beginning the transport of data frames.
